# EUROPEAN PATENT APPLICATION

(11) **EP 4 510 672 A1**
(43) Date of publication of application: **19.02.2025**
(21) Application number: 24193259.9
(22) Date of filing: 07.08.2024
(51) Int. Cl.: H04W 16/18, H04W 24/02, H04L 41/16, H04L 41/147, G06N 3/08

(54) **METHOD, SYSTEM AND COMPUTER READABLE MEDIUM FOR ASSISTING OR ENHANCING 5G RADIO PLANNING**

(30) Priority: 14.08.2023 EP 23382848
(71) Applicant: Telefónica Innovación Digital, S.L., 28050 Madrid (ES); Universitat Politècnica de Catalunya, 08034 Barcelona (ES)
(72) Inventor: Almasan, Paul, 28050 Madrid (ES); Suárez-Varela, José, 28050 Madrid (ES); Lutu, Andra, 28050 Madrid (ES); Cabellos-Aparicio, Albert, 28050 Madrid (ES); Barlet-Ros, Pere, 28050 Madrid (ES)
(74) Representative: Carlos Hernando, Borja

(57) **Abstract**

A method, system, and computer programs for assisting or enhancing 5G radio planning are proposed. The method comprises obtaining information about a new deployment of 5G-generation radio cells in a given area; obtaining information about previous-generation radio cells already deployed in the given area, and computing a plurality of key performance indicators, KPI, of the previous-generation radio cells by processing the obtained information, providing a plurality of KPI previous-generation records as a result; generating a representation of the previous-generation radio cells by processing the obtained information about the new deployment and the plurality of KPI previous-generation records using a deep learning model; and producing a plurality of KPIs for the 5G-generation radio cells by processing the generated representation using a neural network model. Such that the produced KPIs can be used in the assistance or enhancement of the 5G radio planning.

## Description

### Technical Field

The present invention generally relates to mobile networks. In particular, the invention relates to a method, system, and computer programs for assisting or enhancing 5G radio planning, for example, using graph representations and Deep Learning (DL).

### Background of the Invention

Mobile networks are experiencing a profound transformation triggered by the emergence of 5G technology. This radio technology leap aims to provide unmatched transmission speeds, ultra-low latency, and extensive device connectivity, positioning 5G networks at the forefront of wireless communication solutions. The 5G technology is set to pave the way for groundbreaking applications and services that were once unimaginable, such as automation in smart factories or telemedicine. The impact of 5G extends far beyond communication networks, empowering industries to embrace innovation and ushering in a new digital era.

Making commercial 5G connectivity a reality means that Mobile Network Operators (MNOs) install expensive physical hardware in strategic locations. Then, they configure it in order to integrate within their respective radio access network. This is an expensive process that must be carefully planned to optimally meet the capacity and coverage needs of end-users. Specifically, one of the main challenges for the 5G deployment lies in achieving optimal cover- age while accounting for diverse performance metrics (e.g., high user throughput, ultra-low latency). Advanced radio planning tools and propagation models are nowadays widely used by MNOs to support their design and determine the optimal deployment of 5G network equipment.

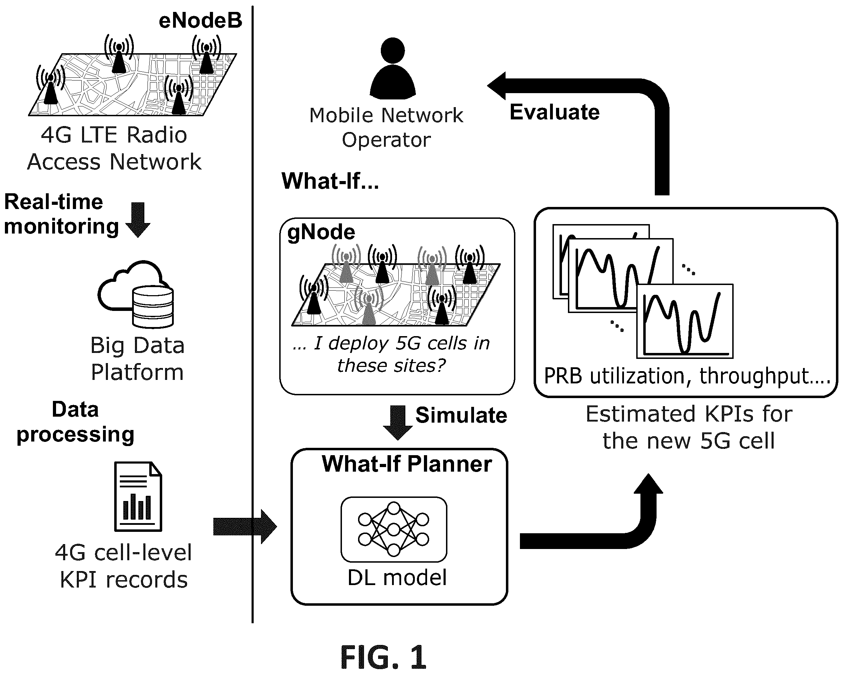

What-if analysis plays an important role in the successful deployment of 5G networks by providing a systematic and analytical approach to decision making. This involves simulating hypothetical scenarios and evaluating their impact on the network performance. When conducting cell planning, MNOs run what-if analysis to assess the feasibility and effectiveness of different deployment strategies (see Fig. 1). Through an iterative simulate-evaluate process, MNOs can analyze the coverage, capacity, and performance implications of different cell placements, allowing network engineers to gradually refine cell planning and optimize their decisions.

With regard to the known radio planning solutions, US9848338B2 [1] proposes a general workflow for optimizing planning of small cell deployments within an area under one or several macrocells. Specifically, this patent proposes the use of performance information from cells deployed in a given area, and utilize a device to predict the effect of placing a small cell at a given location. They mention the possibility to use Machine Learning or neural networks to make these predictions. However, this work does not contain any specification on how to create a data representation for such a use case, and how to effectively use ML-based algorithms to make predictions of candidate cell placements. On the contrary, present invention in some embodiments proposes a novel graph representation tailored for such purpose, which enables not only to make good predictions in the area where it is trained, but also to accurately generalize when applied over other areas. This is thanks to the relative position and orientation values encoded in the graph edges, which enables the graph-based neural network model to capture spatial geometries in the samples seen during training and abstract complex data patterns that can then be exploited in samples from different areas.

Radio planning has been also extensively studied in the literature, with various methods and approaches proposed to optimize network coverage and performance. For example, in [2] they propose a radio network dimensioning method based on heuristics and real network data. The work in [3] proposes a fast method to plan frequencies in a cellular network leveraging linear programming and cloud services. Another relevant related work is the one from [4] where they present a data-driven method to automatically generate cell-level configuration parameters for 4G LTE radio access networks. More recently, in [5] they propose the use of random forests to implement an online coverage estimator. Specifically, their model is trained to predict the mobile network performance from the reference signal received power (RSRP).

Likewise, several commercial software solutions have emerged to enhance network planning and optimization. This is the case of Atoll [6], which offers a wide range of features, including site selection, antenna placement, propagation modeling, and frequency planning, enabling network engineers to design and optimize wireless networks with efficiency and accuracy. According to their public information they use radio propagation models and historical KPIs from the radio access network to optimize planning. Another alternative is Planet [7], which integrates artificial intelligence-based propagation models to improve wireless network planning.

Compared to existing propagation-based models, the present invention produces fast predictions powered by the use of neural networks -- whose execution can be easily parallelized (e.g., on GPUs, TPUs). With this solution, a mobile network operator can potentially test a broader set of cell placements without the need of running computationally intensive propagation models, such as those based on ray tracing. As an example, this large search may be used to shortlist a potential set of promising cell placements that can then be analyzed in more detail by other radio planning methods.

Lastly, other works propose the use of graph-based neural networks for use cases related to mobile networks, such as traffic prediction [8, 9], power control [10, 11], or channel estimation [12, 13]. A more comprehensive review can be found in [14]. In contrast, the present invention is designed for radio planning, and it can rely on a novel graph representation tailored to such a goal.

### References:

[1] Peter Randall, Howard John Thomas, Walter Featherstone, Krassimir Stoyanov VASSILEV, Sthiven PINILLA, Mohsen Zadeh-Koochak (2017). Small Cell Planning (US9848338B2).
[2] M. Umar Khan, A. García-Armada, and J. J. Escudero-Garzás 2020. Service-Based Network Dimensioning for 5G Networks Assisted by Real Data. IEEE Access 8 (2020), 129193-129212.
[3] André Godinho, Daniel Fernandes, Gabriela Soares, Paulo Pina, Pedro Sebastião, Américo Correia, and Lucio S. Ferreira. 2020. A Novel Way to Automatically Plan Cellular Networks Supported by Linear Programming and Cloud Computing. Applied Sciences 10, 9 (2020).
[4] Ajay Mahimkar, Ashiwan Sivakumar, Zihui Ge, Shomik Pathak, and Karunasish Biswas. 2021. Auric: Using Data-Driven Recommendation to Automatically Generate Cellular Configuration. in Proceedings of ACM SIGCOMM. Association for Computing Machinery, New York, NY, USA, 807-820.
[5] Mohd Fazuwan Ahmad Fauzi, Rosdiadee Nordin, Nor Fadzilah Abdullah, Haider A. H. Alobaidy, and Mehran Behjati. 2023. Machine Learning-Based Online Coverage Estimator (MLOE): Advancing Mobile Network Planning and Optimization. IEEE Access 11 (2023), 3096-3109.
[6] Atoll. 2023. Atoll Overview. (2023). https://www.forsk.com/atoll-overview Accessed on June 12, 2023.
[7] Infovista. 2023. 5G Network Planning, Testing and Assurance Automation. (2023). https://www.infovista.com/ Accessed on June 12, 2023.
[8] Wang, X., Zhou, Z., Xiao, F., Xing, K., Yang, Z., Liu, Y., & Peng, C. (2018). Spatio-temporal analysis and prediction of cellular traffic in metropolis. IEEE Transactions on Mobile Computing, 18(9), 2190-2202.
[9] S. Zhao et al., "Cellular network traffic prediction incorporating handover: A graph convolutional approach," in Proc. Annu. IEEE Int. Conf. Sens. Commun. Netw. (SECON), Jun. 2020, pp. 1-9.
[10] Y. Shen, Y. Shi, J. Zhang, and K. B. Letaief, "A graph neural network approach for scalable wireless power control," in Proc. IEEE Globecom Workshops (GC Wkshps), Dec. 2019, pp. 1-6.
[11] M. Eisen and A. Ribeiro, "Optimal wireless resource allocation with random edge graph neural networks," IEEE Trans. Signal Process., vol. 68, no. 4, pp. 2977-2991, Apr. 2020.
[12] T. Jiang, H. V. Cheng, and W. Yu, "Learning to reflect and to beamform for intelligent reflecting surface with implicit channel estimation," IEEE J. Sel. Areas Commun., vol. 39, no. 7, pp. 1931-1945, May 2021.
[13] K. Tekbiyik, G. K. Kurt, C. Huang, A. R. Ekti, and H. Yanikomeroglu, "Channel estimation for full-duplex RIS-assisted HAPS backhauling with graph attention networks," Oct. 2020, arXiv:2010.12004.
[14] He, S., Xiong, S., Ou, Y., Zhang, J., Wang, J., Huang, Y., & Zhang, Y. (2021). An overview on the application of graph neural networks in wireless networks. IEEE Open Journal of the Communications Society, 2, 2547-2565.

### Description of the Invention

The roll out of new mobile network generations poses hard challenges due to various factors such as cost-benefit tradeoffs, existing infrastructure, and new technology aspects. In particular, one of the main challenges for the 5G deployment lies in optimal 5G radio coverage while accounting for diverse service performance metrics. Present invention introduces a machine learning or Artificial Intelligence-based approach (particularly a Deep Learning-based approach) to assist in 5G radio planning by utilizing data from previous-generation cells. In some particular embodiments, the proposed solution relies on a custom graph representation to leverage the information available from existing cells, employing a Graph Neural Network (GNN) model to process such data efficiently.

According to a first aspect, present invention provides a method for assisting or enhancing 5G radio planning. The method comprises performing by one or more processors the following steps: obtaining information about a new deployment of 5G-generation radio cells in a given area; obtaining information about previous-generation radio cells already deployed in the given area, and computing a plurality of key performance indicators (KPI) of the previous-generation radio cells by processing the obtained information, providing a plurality of KPI previous-generation records as a result; generating a representation of the previous-generation radio cells by processing the obtained information about the new deployment and the plurality of KPI previous-generation records using a deep learning model; and producing a plurality of KPIs for the 5G-generation radio cells by processing the generated representation using a neural network model. Such that, the produced KPIs can be used in the assistance or enhancement of the 5G radio planning.

In some embodiments, the representation comprises a graph, and the neural network model comprises a graph-based neural network model. In this case, the generating step comprises representing the previous-generation radio cells as graph nodes together with some historical KPIs thereof with cell-specific features including an antenna model and/or a frequency band; and linking the previous-generation radio cells via graph edges containing relative geometrical information between previous-generation radio cells. Moreover, the geometrical information can include the position and/or the relative orientation of the antennas associated to the previous-generation radio cells.

Alternatively, in other embodiments, the representation comprises an array, and the neural network model comprises a Multi-Linear Regression (MLR) model.

The information about the new deployment can include the location of the 5G-generation radio cells in the given area, an antenna orientation, and/or antenna model, among others.

In some embodiments, the previous-generation radio cells from which the information is obtained are the previous-generation radio cells most nearest to the 5G-generation radio cells, based on a geodesic distance.

In some embodiments, the information about the previous-generation radio cells includes cell-level daily average values of: a Physical Resource Block (PRB) utilization; an uplink user throughput; and a downlink user throughput.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention

The present invention particularly focuses on the transition from 4G to 5G NSA. Here, newly deployed 5G cells anchor to 4G LTE cells, where the traffic is redirected through the 4G EPC network. This forces the co-existence of 5G along with 4G cells in all sites. A typical strategy to kick off the deployment of new generations is to identify potential hotspots in the network, so that the placement of new generation cells opportunistically fulfills two main goals: (i) adding more capacity on the more congested areas, and (ii) offering better quality of service to a potentially higher number of users, since densely populated areas are more likely to have higher amounts of devices supporting 5G connectivity. This is especially important at the beginning of the roll out, when the share of devices supporting the new generation is often quite limited. As an example, first 5G NSA deployments in the UK started around 2019, while by Sep. 2020 only around 1% of active devices supported 5G. Then, as a first approach, 5G cells started to be deployed on the more congested sites to offer redundancy over the new 5G frequency bands.

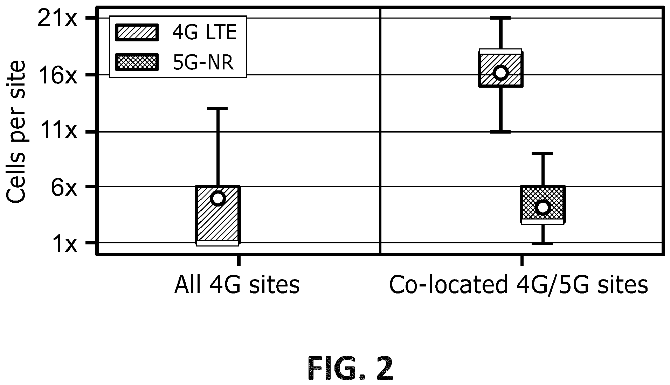

Fig. 2 shows the ratio of 4G and 5G cells per site of an MNO in a large metropolitan area in the UK1. Note that co-located 4G/5G sites have much denser deployments (i.e., more cells per site). On average, they have 16x LTE cells with respect to the median of all 4G sites. Taking a deeper look into the data, it can be observed that new 5G cells are typically deployed following similar orientation patterns to their 4G counterparts at the cell site, albeit with a lower level of redundancy (median of 3x).

At the same time, there are other important factors when considering new deployments, especially regarding the available infrastructure and the cost to deploy new sites. Some of these factors include, for example, the access to power supply, or the available cabling infrastructure. All these aspects collide into a high dimensional problem in which final decisions are non-trivial.

The proposed invention compresses the three main features below:
- It can be applied to what-if analysis in radio cell planning. For example, to optimize cell placement in next-generations Radio Access Networks.
- It proposes a novel graph representation that captures relevant information from cells already deployed (e.g., cells from previous generations) and that can be used as input to graph-based Machine Learning models to accurately predict KPIs of hypothetical cell placements at some locations (e.g., a new cell of the next generation). In this representation cells and/or sectors are represented as graph nodes and may contain some historical KPIs of these cells along with cell-specific features (e.g., antenna model, frequency band). Likewise, cells can be linked via graph edges, which contain relative information of the position between a pair of cells/sectors and the relative orientation of their associated antennas.
- It uses a graph-based neural network model that can directly process the proposed graph representation, and effectively exploit all the geometrical information contained in the edges. This model produces as an output some KPIs of candidate cell placements (e.g., a set of new 5G-NR cells to be evaluated before deployment).

Therefore, the present invention provides a DL-based solution that may complement existing commercial planning tools mostly based on propagation modeling. The proposed data-driven method fully relies on historical data from previous-generation cells, and represents those data as representations (e.g. as graphs) that act as distributed sensors over the network. With the proposed method, MNOs can obtain faster KPI estimations without the need of running computationally intensive propagation models, such as those based on ray tracing. As an example, it may be used to shortlist a potential set of promising cell placements that can then be analyzed in more detail by other radio planning methods.

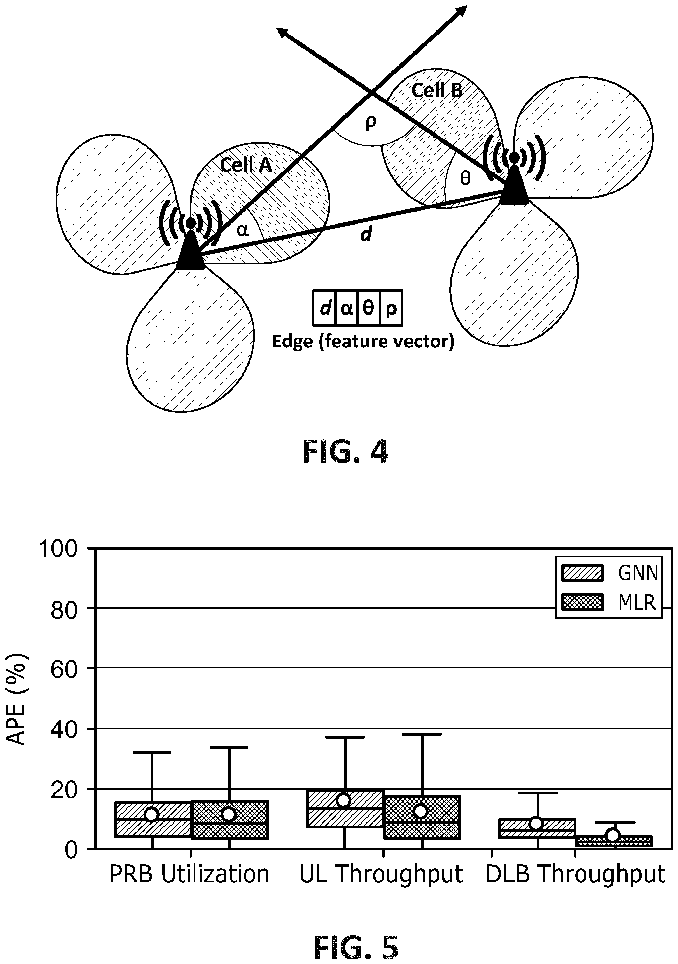

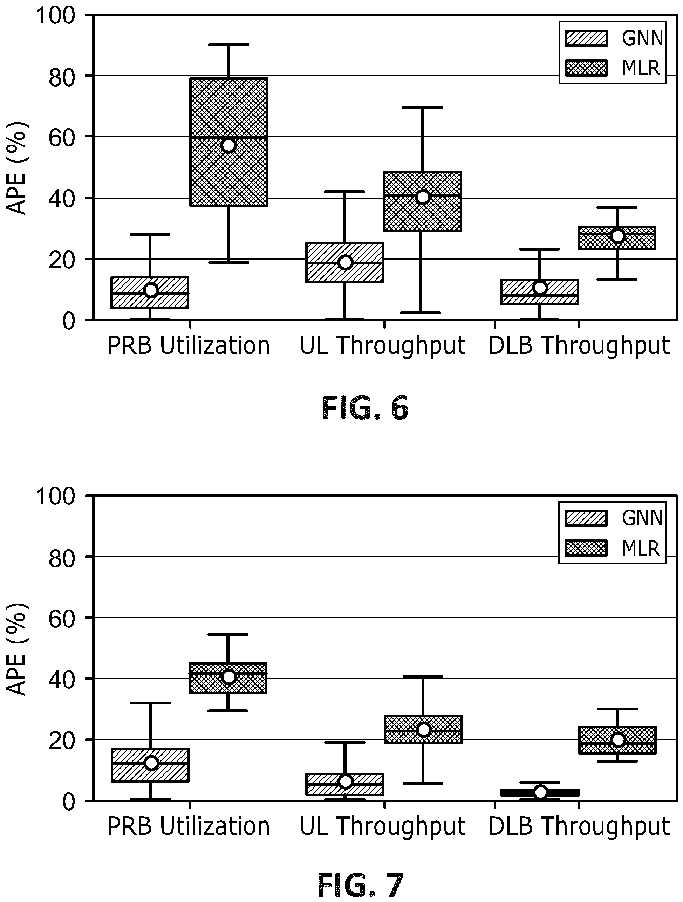

In an embodiment, the present invention is trained with real-world data from the area of London, and then tested over samples in an area in Nottingham (approx. 200 km far from London). Particularly, the invention is used to model cell placement of 5G-NR cells (5G NSA) by using historical KPI data from LTE cells (4G). In Figs. 5 and 7, it can be observed that the relative error on the 3 KPIs that were tested (PRB Utilization, UL/DL avg. throughput) was comparable to the results in the area where it was trained (results labeled as "GNN"). In another embodiment, the invention can also use another model where the same input data is included, but it is represented as an array instead of the cited graph representation. This array is the standard way of structuring the data in traditional neural network models. A Multi-Linear Regression (MLR) model or the like can be used to make the same predictions. Although this model learns how to make good predictions in the area where it is trained (Fig.5), its accuracy degrades remarkably when it is applied over new big areas (e.g. the new area of Nottingham). In any case, these results illustrate the potential benefits of the proposed invention to train it with data from a small area (e.g., from a trial deployment) and then use it reliably to make accurate predictions for cell planning in new areas.

### Brief Description of the Drawings

The previous and other advantages and features will be more fully understood from the following detailed description of embodiments, with reference to the attached figures, which must be considered in an illustrative and non-limiting manner, in which:
Fig. 1: What-if analysis for 5G radio planning.
Fig. 2: Cell/site ratio in a large metropolitan area in the UK (red lines represent the median, white dots the mean).
Fig. 3: Schematic representation of the proposed DL-based What-If Planner. First, it processes KPIs from all 4G cells around the location of the new 5G cell (k nearest neighbors). Then, it builds a graph representation with cell-level data and geometrical information in the edges. Finally, it estimates KPIs for the target 5G cell location.
Fig. 4: Representation of geometrical features.
Fig. 5: Accuracy evaluation in the same geographical area (white dots represent the mean).
Fig. 6: Generalization evaluation in Northern London.
Fig. 7: Generalization evaluation in Nottingham.

### Detailed Description of the Invention and of Preferred Embodiments

Present invention explores the use of Machine Learning (ML) or Al techniques, in particular Deep Learning (DL) techniques, for what-if analysis in 5G radio planning. To this end, it leverages monitoring data from commercial 4G network deployments, and uses this information as a big distributed sensor to predict Key Performance Indicators (KPIs) of potential 5G cell placements. In the illustrated embodiment, the invention proposes a custom graph representation to effectively learn from data using DL. This representation includes cell-level information in graph nodes, and geometrical features in graph edges (e.g., position, antenna orientation), which enables capturing the relation between nearby 4G cells and their potential impact on candidate 5G cells. With this representation, the present invention trains a Graph Neural Network (GNN) model to implement a What-If Planner, which is then used to predict KPIs of new 5G cells deployed at specific sites (see Fig. 1).

### GNN-based What-If Planner

Graph Neural Networks (GNN) have already shown benefits in some network-related use cases, such as routing optimization, or traffic forecasting. Indeed, the networking community has traditionally relied on graphs as a fundamental element to represent networks and solve a plethora of control and optimization problems. A main advantage of these models is their ability to exploit relationships between distributed network elements, by modeling some key relationships between them. As mentioned earlier, the motivation of present invention is to leverage the vast amount of data already collected from deployed 4G cells, and treat all this information as a global distributed sensor network that can be used to evaluate the performance of new 5G cell placements. As such, the use of graphs as a mathematical abstraction to represent 4G cells and their main features is proposed. Likewise, the invention uses graph edges to encode geometrical information (e.g., position, orientation), which helps to extrapolate the data from distributed 4G cells to estimate KPIs at the target 5G cell locations.

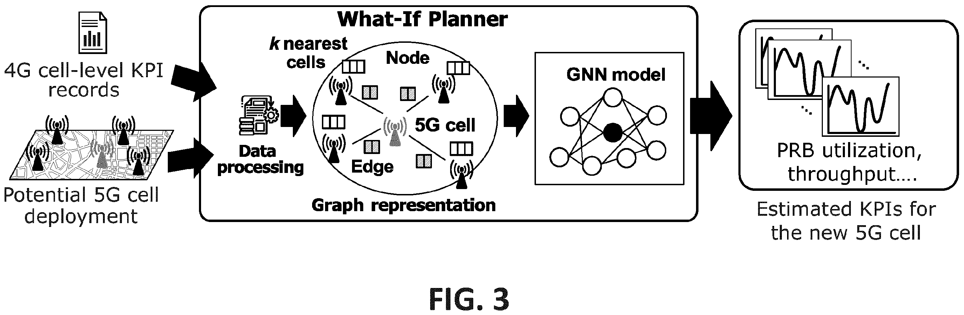

The objective is to build an efficient What-If Planner based on DL (see Fig. 3), that can be easily integrated into a radio planning optimization loop as the one previously shown in Fig. 1.

### Graph representation

Present invention designs the What-If Planner module to receive two main inputs: the 4G cell monitoring records, and some information about the candidate location for a new 5G cell deployment (see Fig. 3). At the beginning of the execution, the module receives hypothetical data about the candidate 5G cell configuration, including information such as the location, antenna orientation (azimuth w.r.t. the North) and model features (manufacturer and antenna model). Then, it retrieves 4G cell monitoring data from the k nearest neighbors (by geodesic distance) to the candidate 5G cell placement. With this, a graph that represents the 4G cells as nodes is built, which have an associated feature vector that stores historical KPIs from the 4G cells. Moreover, the invention can add edges between all nodes in the graph representation (i.e., k nearest 4G cells and the candidate 5G cell), and introduce some information about the position and orientation in the edges. Here, it is important to define a good representation that the DL model can then effectively exploit. Hence, it avoids absolute metrics (e.g., geographic coordinates), which would lead to out-of-distribution numerical values when the model is applied over other areas not seen during training (e.g., other coordinates). Instead, the invention uses geometrical features of relative position and orientation, as follows: (i) the geodesic distance d between cell sites (in meters), and (ii) a set with three angles (*α*, *θ*, and *ρ*) that uniquely define the relative orientation between a pair of cells. As shown in Fig. 4, *α* and *θ* respectively represent the orientation of a pair of cells A and B with respect to the distance vector that links the two cell sites. Likewise, *ρ* is the angle at the intersection between the two direction vectors of cell A and cell B (Note that most 4G and 5G cells in commercial deployments are sectored (i.e., they use directional antennas). For omnidirectional antennas information regarding the orientation is not included).

### Graph Neural Network model

Once the graph representation is completed, a GNN model is used to process all the information and exploit the relationships between 4G cells in the graph, to finally predict their impact on the new 5G cell location. GNNs are DL models specifically tailored to process graph-structured information. For example, unlike other popular neural network models (e.g., convolutional, recurrent, multi-layer perceptron), these models support graphs of variable number of nodes and edges and, more importantly, they are equivariant to node and edge permutations. In the context of radio planning, this means that by representing the network as a graph, GNN models can find symmetries or equivalent patterns (e.g., combinations of relative distances and orientations) between the network scenarios seen during training and new scenarios where the model is applied after training. This is a property very interesting from the practical point of view: the invention would typically train the What-If Planner with data of 5G cells already deployed, while reaping its benefits when applied to a new area where there are no 5G cells.

### Experimental Evaluation

In this section, the proposed What-If Planner solution is evaluated using real-world data from an MNO in the UK. In particular, what is seek is to answer the following questions:
- What is the accuracy of the proposed solution for what-if analysis in 5G radio planning? In the 'Accuracy evaluation' section below, the proposed solution is applied over real- world data in the City of London and its accuracy is compared over 3 KPIs (PRB utilization, UL/DL throughput) w.r.t. a traditional data-driven solution in the transition from 4G to 5G NSA.
- Does the What-If Planner generalize well when applied to other geographical areas? In the 'Generalization to other geographical areas' section a model trained is used on samples from the City of London, and its accuracy is tested over a different area in the metropolitan area of London (Northern London), and another city which is ≈200 km far from London (Nottingham).
- How efficiently does the proposed solution perform in terms of execution time? In the 'Execution time' section below the time it takes for the What-If Planner is estimated to evaluate various 5G cell planning schemes over cities with different population density (London and Nottingham).

### Datasets

The invention collects multiple cell-level KPIs from a top-tier UK MNO in various geographical areas, including the metropolitan area of London and the city of Nottingham. To evaluate the proposed solution, a dataset with historical KPIs of already deployed 4G and 5G cells is built. Data from 4G cells is used as input for the What-If Planner model, and 5G KPI data as labels to train and validate the accuracy of the model. Particularly, the invention processes three months of data (October to December of 2022), and stores the cell-level daily average values of: (i) Physical Resource Block (PRB) utilization, (ii) Uplink user throughput, and (iii) Downlink user throughput. In total, more than 30 GB of raw data for thousands of 4G cells and hundreds of 5G cells were obtained.

After processing the dataset, the present invention builds a graph representation to train the GNN-based model. To do this, the present invention makes the nodes represent cells, and in the edges it stores information about the relative position and orientation of the cells. In node feature vectors the present invention adds the KPI values, and in the edges it includes: (i) the geodesic distance d, and (ii) the three orientation angles *α*, *θ*, and *ρ* previously defined. The present invention connects all 4G nodes in the graph with the target 5G nodes in a radius of d<=500 meters.

The training process of the models involves a meticulous approach due to the complexity of real-world data and the diverse nature of the metrics. For each KPI, the present invention carefully analyzes the data distribution and implements appropriate normalization techniques (e.g., z-score, log. normalization) to ensure meaningful and effective model training. It iterates over all 5G cells in the graph, and for each one it extracts a subgraph comprising the k=50 nearest neighboring 4G cells. These subgraphs are the ones used by the *What-If Planner* solution, which are then used in the experiments to predict KPIs for one 5G cell placement at a time.

### Baselines

A core component of the What-If Planner is the use of DL to exploit the complexity behind all the available data in the 5G radio planning scenario. In the experiments, the present invention aims to evaluate the accuracy and the generalization capability of its internal GNN model against another non-DL-based solution for the same task, which exploits the same 4G KPI data as the solution.

According to a first embodiment, the following model, which is based on a Graph Neural Network (GNN), is considered. Behind the GNN acronym, there is a broad family of graph-based DL models with different features and designed to pursue different goals. In particular, the present invention implements a Message-Passing Neural Network (MPNN) with support for edge features and a message-passing algorithm between connected nodes (T =2 iterations). This model is one of the most expressive canonical definitions of GNN, which endows it with the possibility to abstract complex patterns from graph-structured data and capture relevant relationships between nodes (i.e., cells) in the graph. As an example, GNNs are equivariant to node and edge permutation, which means that node-level outputs are the same regardless of the node and edge ordering in the graph. Also, GNNs have the capability of abstracting patterns at different levels of the graph, being able to identify clusters of nodes with equivalent or similar patterns to others that were seen during training.

According to a second embodiment, the following model, which is based on Multiple Linear Regression (MLR), is considered. To establish a non-DL-based baseline, the present invention implements a MLR model that operates on the same KPI data as the GNN, but it does not structure the information as a graph. This model concatenates all node feature vectors into a larger vector and performs a multiple linear regression to predict the KPI on the target 5G cell. Hence, it does not include geometrical information between cells (i.e., relative position and orientation of antennas). A well-known advantage of models based on linear regression is their simplicity and interpretability, which is very useful from a practical point of view. Note that MLR models have a fixed-size input. To train this model with samples of variable size the present invention considers the maximum number of nodes in the graphs (k=50) and apply zero padding for smaller graphs. This is not required for the GNN model, as it inherently supports samples with a variable number of nodes and edges.

### Accuracy evaluation

In an embodiment, the present invention evaluates the accuracy of the What-If Planner on a broad area within the City of London. To this end, it splits the dataset into training, validation and test sets. The training and validation datasets contain samples from the month of October 2022. The present invention uses the remaining dates to test the model. To compare the accuracy of the GNN model with the MLR baseline, the present invention uses exactly the same training dataset, and it trains three independent models for predicting the various 5G KPIs: PRB utilization, Uplink user average throughput, Downlink user average throughput. In the input samples, node feature vectors corresponding to 4G cells contain these same KPIs. As a metric to measure the accuracy, the present invention selects the Absolute Percentage Error (APE), which allows performing a scale-independent assessment of the models' accuracy.

Fig. 5 shows the experimental results. It can be observed that the GNN model obtains a worst-case Mean Absolute Percentage Error (MAPE) of ≈17%, particularly for the case of the UL throughput. It can also be noted that both models achieve comparable accuracy on all KPIs, with the MLR performing slightly better on two of the KPIs. These results show that even with a simpler model based on multiple linear regression the present invention can achieve good results in terms of accuracy, at least when the solution is applied over cells within the same geographical area.

### Generalization to other geographical areas

A key requirement for the What-if Planner is the robustness when it is applied to other areas and cities where it was not trained on. This is because typically the present invention would train the model leveraging data from the areas where 5G is already deployed, and then the present invention would use it to assist in 5G radio planning in new areas.

To evaluate the generalization capabilities of the proposed solution, the present invention selects the models it trained with samples from the City of London, and evaluates their accuracy when applied to two different areas: Northern London and the city of Nottingham. Figs. 6 and 7 show the accuracy results in the two areas respectively. The GNN model continues to show similar accuracy levels to the previous evaluation, with a worst-case MAPE of ≈19%. However, the MLR exhibits a remarkable degradation, with MAPE levels rising up to ≈59%. These results evidence a superior generalization of the GNN model where the present invention tailored to exploit contextual information from surrounding 4G cells by processing the geometrical information encoded in edges (i.e., relative position and antenna orientation). In contrast, the MLR model - despite its good accuracy when applied over the same geographical area - struggles to capture the fundamental relationships between the KPIs of the 4G cells distributed across space, as well as adapt to potential shifts in the distribution of the KPIs to predict. This degradation in generalization is partly explained by the fact that the MLR model represents the information as a flattened array without any geometrical information between cells (i.e., relative position and antenna orientation). Also, in contrast to the GNN model, it does not have any inductive bias that helps capture relational patterns between distributed cells and it is sensitive to node ordering.

### Execution time

A main application devised for the proposed What-If Planner is to use it as a quick iterative optimization solution to assist in 5G radio planning, as in the optimization loop earlier depicted in Fig. 1. To this end, the efficiency of the model is assessed in terms of execution time. A budget-constrained what-if panning use case is considered: the MNO uses the proposed solution for testing several 5G cell placement schemes to find the best one according to their goals. The present invention selects the cities of London and Nottingham as a reference, from where it collects data of the 5G NSA cells already deployed. It considers that the MNO aims to test 10 different deployment schemes accounting for different goals (e.g., maximize capacity, coverage), with a fixed budget. Considering the population density and the size of the two cities, it sets a hypothetical maximum of 8,000 5G cells for the City of London, and 2,000 5G cells for the city of Nottingham. Then, it measures the execution time of the GNN model and the baseline MLR when they predict over samples of London and Nottingham (single-thread executions in a server with Intel Xeon Silver 4214R CPU @ 2.40GHz). With this, the present invention estimates the time it would take to test the 10 candidate deployment sites in both cities.

In Table 1 the execution times for the GNN and MLR models are shown. The GNN model produces quick results, with an estimated time of <12 minutes to test all deployment schemes in the City of London. Likewise, the simpler MLR model provides an even faster inference (e.g., <10 minutes in the City of London). Nevertheless, the present invention do not considers this small difference to be determinant in selecting one model over the other from a practical point of view. Note that the purpose of these experiments is merely illustrative to show a potential use case that can take advantage of using the proposed solution, and to estimate the cost of running it there. The present invention could also further optimize the proposed implementation, for example, by adding support for CPU or GPU parallelism.

**Table 1: Execution times**

| Model | City of London (8k cells) | Nottingham (2k cells) |
|---|---|---|
| GNN | 11 mins. 31 s. | 9 mins. 52 s. |
| MLR | 3 mins. 5 s. | 2 mins. 16 s. |

The experimental results showed that the proposed solution effectively learns to predict key performance indicators on candidate 5G cell placements (MAPE <17% when trained and tested over the City of London). Moreover, it has been observed that it achieves good generalization capability when tested in other regions where the model was not trained, achieving a MAPE of <19% on samples from Northern London and Nottingham. The results also indicate that the proposed solution has a low execution cost when applied to a large-scale scenario. Given its generalization and low-cost properties, the proposed solution can be a good tool to complement existing methods for radio planning and can help produce more optimal deployment decisions.

As future work, the present invention plans to analyze in more detail the potential benefits of the proposed solution with respect to - or in combination with - other well-known methods for radio planning, such as those based on ray tracing. Also, it is acknowledged that the benefits in terms of generalization of the GNN model come at the cost of less interpretability if they are compared with simpler models, such as the baseline MLR model used in the evaluation. In this vein, the use of DL-based interpretability techniques for providing more transparent results on the predictions produced by the solution as well as to create models that can produce confidence intervals along with their predictions will be further investigated.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method for assisting or enhancing 5G radio planning, the method comprising performing by one or more processors the following steps:
obtaining information about a new deployment of 5G-generation radio cells in a given area;
obtaining information about previous-generation radio cells already deployed in the given area, and computing a plurality of key performance indicators, KPI, of the previous-generation radio cells by processing the obtained information, providing a plurality of KPI previous-generation records as a result;
generating a representation of the previous-generation radio cells by processing the obtained information about the new deployment and the plurality of KPI previous-generation records using a deep learning model; and
producing a plurality of KPIs for the 5G-generation radio cells by processing the generated representation using a neural network model,
such that the produced KPIs can be used in the assistance or enhancement of the 5G radio planning.

2. The method of claim 1, wherein the representation comprises a graph, and the neural network model comprises a graph-based neural network model.

3. The method of claim 2, wherein the generating step comprises:
representing the previous-generation radio cells as graph nodes together with some historical KPIs thereof with cell-specific features including an antenna model and/or a frequency band; and
linking the previous-generation radio cells via graph edges containing relative geometrical information between previous-generation radio cells.

4. The method of claim 3, wherein the geometrical information comprises a position and/or a relative orientation of the antennas associated to the previous-generation radio cells.

5. The method of claim 1, wherein the representation comprises an array, and the neural network model comprises a Multi-Linear Regression, MLR, model.

6. The method of any one of the previous claims, wherein the information about the new deployment includes a location of the 5G-generation radio cells in the given area, an antenna orientation, and/or antenna model.

7. The method of any one of the previous claims, wherein the previous-generation radio cells comprises 4G and/or 5G radio cells.

8. The method of any one of the previous claims, wherein the previous-generation radio cells from which the information is obtained are the previous-generation radio cells most nearest to the 5G-generation radio cells, based on a geodesic distance.

9. The method of any one of the previous claims, wherein the information about the previous-generation radio cells includes cell-level daily average values of: a Physical Resource Block, PRB, utilization; an uplink user throughput; and a downlink user throughput.

10. A system for assisting or enhancing 5G radio planning, comprising:
at least one memory;
one or more processors, wherein the one or more processors are configured to:
obtain information about a new deployment of 5G-generation radio cells in a given area;
obtain information about previous-generation radio cells already deployed in the given area, and computing a plurality of key performance indicators, KPI, of the previous-generation radio cells by processing the obtained information, providing a plurality of KPI previous-generation records as a result;
generate a representation of the previous-generation radio cells by processing the obtained information about the new deployment and the plurality of KPI previous-generation records using a deep learning model; and
produce plurality of KPIs for the 5G-generation radio cells by processing
the generated representation using a neural network model,
such that the produced KPIs can be used in the assistance or enhancement of the 5G radio planning.

11. The system of claim 10, wherein the representation comprises a graph, and the neural network model comprises a graph-based neural network model.

12. The system of claim 10, wherein the representation comprises an array, and the neural network model comprises a Multi-Linear Regression, MLR, model.

13. The system of claim 10, wherein the information about the previous-generation radio cells includes cell-level daily average values of: a Physical Resource Block, PRB, utilization; an uplink user throughput; and a downlink user throughput.

14. The system of claim 10, wherein the information about the new deployment includes a location of the 5G-generation radio cells in the given area, an antenna orientation, and/or antenna model.

15. A non-transitory computer readable medium comprising code instructions that when executed by a computing device implement the method of any of claims 1 to 9.
